# EUROPEAN PATENT SPECIFICATION

(11) **EP 3 217 481 B1**
(45) Date of publication and mention of the grant of the patent: **03.10.2018**
(21) Application number: 17159710.7
(22) Date of filing: 07.03.2017
(51) Int. Cl.: H01R 4/66, F16B 37/14, H01R 4/34, H01R 4/64, B05B 12/20

(54) **ELECTRIC EARTH SYSTEM AND EARTH CONNECTION PRODUCTION METHOD**
ELEKTRISCHES MASSESYSTEM UND MASSEVERBINDUNGS-HERSTELLUNGSVERFAHREN
SYSTÈME DE MISE À LA TERRE ÉLECTRIQUE ET PROCÉDÉ DE PRODUCTION DE CONNEXION À LA TERRE

(30) Priority: 10.03.2016 DE 102016104396
(43) Date of publication of application: 13.09.2017
(73) Proprietor: Newfrey LLC, New Britain, CT 06053 (US)
(72) Inventor: Köhler, Robert, 35390 Gießen (DE); Pimper, Ralf, 35390 Gießen (DE)
(74) Representative: SBD IPAdmin

(56) References cited:
- EP-A1- 0 640 404
- DE-A1- 10 138 800
- DE-A1-102012 016 365

## Description

The present invention relates to an electric earth system, in particular for a motor vehicle body, comprising an earth stud, which can be connected to an electrically conductive earth base, such as a bodywork panel, and which has a shaft extending along a longitudinal axis and a flange, wherein the earth stud defines a contact surface concentric with the shaft, and comprising a covering means, which can be connected to the shaft and has a covering surface, which in the connected state at least partially covers the electrical contact surface.

The present invention also relates to a method for producing an electric earth connection in particular with use of an earth system of the above-described type, wherein an electrically conductive earth stud is provided, which has a shaft defining a longitudinal axis and a flange, wherein the earth stud is joined to an electrically conductive earth base in such a way that electrical contact is produced therebetween and an electric contact surface is defined, and wherein a covering means, which has a covering surface, is connected to the earth stud, more specifically in such a way that the covering surface at least partially covers the contact surface.

An electric earth system of this type and also a method of this type for producing an electric earth connection are known from document EP 0 640 404 A1. In the method described there a covering cap in the form of a cap nut is firstly secured to a threaded pin, and the threaded pin is then secured to a metal plate. A paint is then applied to the covering cap and the metal plate, more specifically once an end face of the covering cap rests on a matching location of the threaded pin. The covering cap is then detached from the matching location, and an add-on part, such as a cable lug, is placed therebetween. Lastly, the add-on part is pressed against the matching location, more specifically by pressing the covering cap against the add-on part. The covering cap may be formed on one part or two parts.

Document DE 10 2006 034 501 A1 discloses an earth contact arrangement, in which an earth stud is joined to a bodywork panel and a painting process is then carried out in such a way that the earth stud is also painted in the region of an external thread. Contact is established with a cable lug by fitting the cable lug onto a painted flange surface of the earth stud and then screwing a paint-scraping nut onto the earth stud, which nut on the lower side produces an electrical connection to the cable lug and produces an electrical connection relative to the earth stud via the scraped-away part of the external thread of the earth stud. In order to prevent abrasion in the region of the cable lug as the paint is scraped away from the external thread, a ring seal can be arranged around the shaft.

It is also known from document DE 101 38 800 A1, in the case of an earth system, to screw a cap nut made of plastic onto an earth stud made of metal, wherein the cap nut, in its region pointing towards a contact surface, might not rest flat on the contact surface, but via a seal lip of a seal flange. The seal lip is intended to prevent paint, during painting, from reaching a region located radially within the seal lip.
This document discloses the preamble of each of the independent claims 1 and 12.

Lastly, document WO 2014/176208 A1 discloses a sealing cap for fitting onto a securing element, wherein a sealant barrier ring is inserted into an inner recess of the sealing cap. With this barrier ring, the cap is fitted onto a region around the securing element, wherein fluid sealant is arranged in a region herearound in order to seal off the interior of the sealing cap.

If the earth stud and the covering means are formed as a cap nut made of aluminium, it is known to introduce a lubricant in order to improve the screwed connection between the threaded portions. In some cases this lubricant reaches the contact surface, which may then lead later to compromised earth connections when a cable lug is fitted.

On this basis, the object of the invention is to specify an improved electric earth system and an improved method for producing an electric earth connection.

The above object is achieved with the electric earth system described in the introduction in that a seal arrangement is arranged between the contact surface and the covering surface, such that a sealed-off region is formed between the seal arrangement and the shaft, within which region there is located at least part of the contact surface.

The above object is also achieved by a method of the type described in the introduction, wherein, before the connection step, a seal arrangement is arranged between the contact surface and the covering surface in such a way that in the connected state a sealed-off region is formed between the seal arrangement and the shaft, within which region there is located at least part of the contact surface.

It is possible with the earth system according to the invention and the associated production method to produce improved electric earth contact connections.

A reason for the improved electric connectability may lie in the fact that the contact surface lies within a sealed-off region, within which increased pressure can preferably also build up. This can in turn advantageously lead to the fact that a lubricant present in the sealed-off region remains in a liquid state, even in the event of a temperature increase as occurs by way of example during a painting process (for example of more than 200°C), and does not evaporate and precipitate on the contact surface.

An evaporation of this type can occur in the prior art for example when, on account of an increased pressure build-up, a flat seal between covering surface and contact surface is no longer sufficient to maintain the pressure and said pressure drops suddenly. This sudden pressure decrease leads to an evaporation of the lubricant (or other liquid constituents inside the sealed-off region). In other words, it may be in the prior art that the boiling point curve of a phase state graph of water is exceeded, water generally forming part of the lubricant.

The lubricant is applied for example before the initial connection of the covering means to the shaft, by way of example by immersion or spraying of the shaft. The part in question is then dried. Only afterwards is the connection established. The lubricant is consequently generally limited to the region of a connection between shaft and covering means and cannot spread into the region of the contact surface when it is possible to keep the pressure inside the sealed-off region as high as possible.

The seal arrangement is consequently preferably designed to hermetically seal off the sealed-off region, such that, even during a painting process with temperatures of more than 200°C, it is not possible for a sudden pressure drop (and consequently a boiling delay) to occur inside the sealed-off region.

It is also possible with the invention to provide a large contact surface. The covering surface is generally dimensioned such that it covers at least 50% of the contact surface in the connected state.

It is generally conceivable to produce the seal arrangement in that the contact surface and the covering surface are treated by a grinding surface processing or the like, such that these surfaces can actually bear against one another over an entire periphery so closely that the required tightness or hermetic seal can be provided.

However, it is particularly preferred when the seal arrangement has a separate seal element acting between the contact surface and the covering surface, for example in the form of an O-ring or the like.

The required hermetic seal can be achieved with a separate seal element of this type.

Here, it is generally conceivable for the contact surface and the covering surface to be left substantially planar, such that these extend substantially radially relative to the longitudinal axis. Here, a seal element, such as an O-ring, could be arranged between these surfaces in order to form the sealed-off region.

However, it is particularly preferred when a covering surface annular groove is formed in the covering surface, into which groove a covering surface ring seal is inserted.

Here, the ring seal protrudes relative to the annular groove in the non-compressed state. The cross section of the groove and the cross section of the ring seal are preferably co-ordinated with one another such that the ring can be substantially completely compressed into the groove and here establishes a high seal in the radial direction between the covering surface and the contact surface. At the same time, the covering surface and the contact surface can thus nevertheless bear against one another in a planar manner over at least a larger part, for example at least 50% of the contact surface.

This can make it possible for other parts to also be prevented from entering the region between covering surface and contact surface.

It is generally preferred here when at least a predominant part of the contact surface is arranged radially within the covering surface annular groove, i.e. is arranged between the covering surface annular groove and the shaft.

It is also advantageous on the whole when the covering surface has a radial extent with a radially inner region and with a radially outer region, wherein the covering surface annular groove is arranged in the radially outer region of the covering surface.

A comparatively large region of the covering surface can thus be arranged radially inwardly and can form a flat connection or abutment with the contact surface.

It is generally conceivable for the connection between the shaft and the covering means to be any mechanical connection that preferably can establish a certain axial force therebetween.

It is particularly preferred when the connection between the shaft and the covering means is a threaded connection.

The threaded connection, or another connection between shaft and covering means, is preferably configured to establish an axial force between the earth stud and the covering means that is greater than 2 kN. This axial clamping force or preload force is generally dependent on the materials and the surface nature of the used earth studs. Much higher clamping forces can also be obtained, which for example could be greater than 5 kN, or also greater than 10 kN. In the case of a threaded connection, the torques that can be applied to the thread are preferably greater than 5 Nm, but can also be much greater, again depending on the materials and on the surface nature of the earth stud.

Within the sealed-off region, a pressure that is preferably greater than 3 bar, in particular greater than 5 bar, can build up via the seal arrangement. In some embodiments the pressure that can build up inside the sealed-off region can also assume even higher values, for example of more than 7 bar or more than 10 bar.

By comparison, the maximum pressure in an earth system without seal arrangement between contact surface and covering surface is often less than 3 bar, in particular less than 2.5 bar.

It is generally conceivable for the covering means to be a simple cap or a nut.

However, it is particularly preferred when the covering means is a cap that is designed to engage over the shaft of the earth stud and that is designed in particular as a cap nut.

Here, the sealed-off region extends preferably radially inwardly from the seal arrangement and over the entire threaded engagement or other connection engagement between shaft and covering means as far as a base of a blind bore of a cap of this type.

It is generally conceivable for the covering means to be produced from a plastics material.

However, it is preferred when the earth stud is produced from metal and/or when the covering means is produced from metal.

The earth stud and/or the covering means is/are preferably produced from an aluminium alloy. The earth stud and/or the covering means is/are also preferably produced by cold forming.

Cold-formed components of this type are often provided as bulk goods and may be damaged for example in the region of their contact surface or bearing surface.

On account of the seal arrangement, however, damage of this type during transport does not have a negative influence on the functionality of the earth system formed herewith.

A lubricant is preferably applied to the connection between the shaft and the covering means, by means of which lubricant any friction occurring with relative movements between the shaft and the covering means is reduced.

This can lead to improved connections between shaft and covering means, in particular when these are produced from an aluminium alloy and the connection is a threaded connection.

In accordance with a further preferred embodiment the earth stud and/or the covering means can be painted externally.

The painting in the case of the method according to the invention is preferably performed following the connection of the covering means to the earth stud and preferably in a state in which the earth stud is already joined to an earth base, such as a bodywork panel or the like, more specifically in an electrically conductive manner.

It is also advantageous on the whole when a contact surface annular groove is formed in the contact surface, into which groove a contact surface ring seal is inserted.

A contact surface annular groove of this type with a contact surface ring seal inserted therein can be provided alternatively to a covering surface annular groove with a covering surface ring seal inserted therein.

In both cases the ring seal in question can form the sole separate seal element of the seal arrangement.

In accordance with a particularly preferred embodiment, however, the covering surface annular groove and the contact surface annular groove are provided in combination, and a ring seal is inserted into each of the annular grooves.

The sealing force and the tightness provided hereby can be further increased as a result.

In accordance with a preferred embodiment the covering surface annular groove is arranged here at least partially within the contact surface annular groove, as considered radially.

In this way, a comparatively large contact surface can be provided radially within the contact surface annular groove.

It is also preferred when the contact surface annular groove and the covering surface annular groove overlap one another in part in the radial direction.

In the case of the method according to the invention the joining step and the connecting step can be swapped. It is also preferred when, following the connecting step and following the joining step, a painting step is performed, in which the covering means and the earth stud are painted jointly with the earth base, to which the earth stud is joined. This can be implemented at the above-mentioned relatively high temperatures.

In the method according to the invention, following the painting, the covering means is also preferably released from the earth stud and then at least one contact element, such as a cable lug, is slid onto the earth stud. The covering means is then connected again to the earth stud, such that the at least one cable lug is fixedly clamped between the contact surface and the covering means. An electrically conductive connection is established here between the contact surface of the earth stud and the cable lug. Since the contact surface remains free from lubricant (which is electrically poorly conductive), even during the painting, an outstanding electric earth connection can be established hereby.

A secondary earth connection can additionally occur via the covering surface and a possible threaded connection between covering means and earth stud, wherein, however, lubricant may be provided in the region of the threaded connection, which generally worsens the electrical connection compared with the direct connection between contact surface and cable lug.

The insertion of the ring seals into the seal grooves can be checked for example via a camera system.

The seal element or the ring seal or the ring seals is/are preferably formed from a rubber material, a foam rubber material, from an EPDM material or the like, in particular a material that is thermally stable above 200°C and retains its elastic properties.

With the use of a ring seal both in a contact surface annular groove and in a covering surface annular groove, the inner region of the earth arrangement with the threaded portion can be maintained permanently and in particular for life, even when a cable lug is mounted. In particular, impurities or water or the like can thus be prevented from reaching the interior during operational use, for example in a motor vehicle, such that the earth connection between the cable lug and the contact surface and where appropriate between covering surface and the cable lug is protected against corrosion. Consequently, a faultless earth current flow can be ensured for life.

The seal arrangement can also prevent paint or other liquid from infiltrating the sealed-off region from the outside during the painting process, such that the contact surface of the earth stud remains free from contaminations. A faultless transition resistance during the subsequent mounting of a cable lug can thus be ensured.

Due to the seal arrangement, a seal can be ensured even when the contact surface and/or the covering surface is damaged by points of impact on account of previous transport or the like.

The seal arrangement is preferably mounted in an outer edge of a gap between covering means and earth stud, i.e. in a region of an outer edge of the contact surface. A separate ring seal may ideally compensate for fluctuations in the surface nature of contact surface and/or covering surface. The seal arrangement can seal off the sealed-off region or the sealed-off volume hermetically or in a gastight and pressure-tight manner.

It goes without saying that the features mentioned above and the features yet to be explained below can be used not only in the specified combinations, but also in other combinations or in isolation, without departing from the scope of the present invention.

Exemplary embodiments of the invention are illustrated in the drawing and will be explained in greater detail in the following description. In the drawing:
- Figure 1: shows a schematic longitudinal sectional view through an earth system according to a first embodiment;
- Figure 2: shows a partial view, comparable to Figure 1, of an alternative embodiment of an earth system according to the invention;
- Figure 3: shows a perspective view of an earth stud for a further embodiment of an earth system according to the invention;
- Figure 4: shows a perspective view of a covering means for a further embodiment of an earth system according to the invention;
- Figure 5: shows a longitudinal sectional view through an earth system formed with the earth stud of Figure 3 and the covering means of Figure 4, more specifically prior to insertion of a contact element, such as a cable lug; and
- Figure 6: shows an illustration comparable to Figure 5 of the earth system shown there following the insertion of a contact element, such as a cable lug.

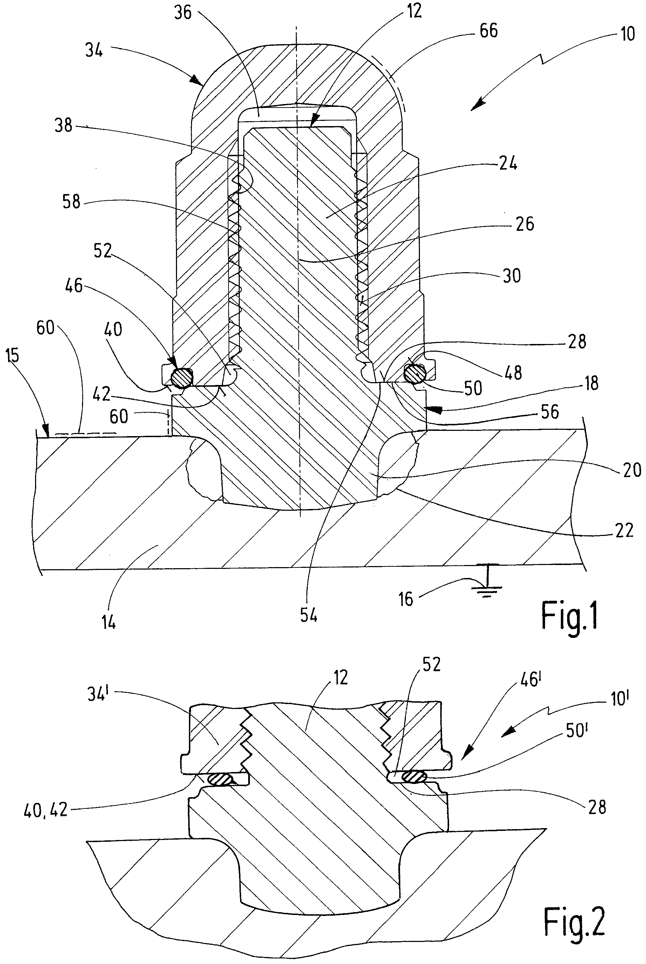

An electrical earth system for a vehicle body is illustrated schematically in Figure 1 and is designated generally by 10.

The earth system 10 includes an earth stud 12, which is joined to an earth base 14, which for example can be formed by a bodywork panel 15. The earth base 14 forms an electric earth 16.

The earth stud 12 has a flange 18, on one axial side of which a joining portion 20 is formed.

The joining portion 20 is configured to enter into an electrically conductive connection with the earth base 14, for example via a schematically indicated welded connection 22. A welded connection 22 of this type can be produced by way of example by a stud welding method, as is known in general.

The earth stud 12 can be produced from a metal, in particular from a light metal, such as an aluminium alloy.

The earth stud 12 also has a shaft 24 on the side of the flange 18 axially opposite the joining portion 20, which shaft in the present case has a smaller diameter than the flange 18, but may also have a diameter corresponding to that of the flange 18.

The shaft 24 extends along a longitudinal axis 26.

In Figure 1 it is illustrated that the flange 18 has a larger diameter than the shaft 24, such that an axial side of the flange 18 facing towards the shaft 24 forms a contact surface 28. The contact surface 28 is oriented substantially transversely, in particular perpendicularly to the longitudinal axis 26 and is preferably annular.

If the flange 18 and the shaft 24 have the same diameter, a contact surface 28 of this type can be formed by means of the earth stud also as an annular surface around the earth stud 12 on the earth base 14.

In other words, the earth stud 12 defines either a contact surface 28 on an axial side of the flange 18 or a contact surface on an upper side or surface of the earth base 14 facing towards the earth stud 12.

The shaft 24 preferably has an external thread 30 on its outer periphery.

The earth system 10 also has a covering means 34, which can be formed as a cap in the form of a cap nut. The covering means 34 includes a blind hole 36, which can be formed as a blind bore and on the inner periphery of which an internal thread 38 can be formed, as illustrated in Figure 1. The internal thread 38 is matched to the external thread 30 of the shaft 24 of the earth stud 12. An end face 40 of the covering means 34 forms a covering surface 42, which, when the covering means 34 is connected to the shaft 24, rests flat on the contact surface 28, as illustrated in Figure 1. The covering surface 42 likewise extends in a direction transversely to the longitudinal axis 26 and is preferably oriented perpendicularly hereto.

The covering means 34 is preferably formed in one part and is preferably formed from a metal, in particular from an aluminium alloy.

A seal arrangement 46 is provided between the contact surface 28 and the covering surface 42. The seal arrangement 46 in the present case includes a covering surface annular groove 48, which extends starting from the covering surface 42 in the axial direction and into which a covering surface ring seal 50 is inserted, which in the uncompressed state protrudes relative to the covering surface 42 and has a cross section that is adapted to the cross section of the covering surface annular groove 48, such that the covering surface ring seal 50 either can be received completely within the annular groove 48 or protrudes relative to the covering surface 42, even in the compressed state, as illustrated in Figure 1. In this case it is preferable in order to nevertheless attain a planar abutment between contact surface 28 and covering surface 42 if an axial recess is provided in the contact surface 28, into which recess the covering surface ring seal 50 can protrude in the axial direction, as indicated schematically in Figure 1.

Due to the seal arrangement 46, a sealed-off region 52 is formed, which lies within the seal arrangement 46 as considered radially and in particular includes part or a predominant part of the contact surface 28 and preferably also the region of the threaded engagement between the external thread 30 and the internal thread 38 and also a remaining part of the blind hole 36.

The covering surface 42 has a radially inner region 54 and a radially outer region 56. The seal arrangement 46 is formed in the radially outer region 56.

A lubricant 58 can be applied to the earth stud 12 and/or to the covering means 34 in the region of the respective thread. The lubricant may be a water-based lubricant, which for example can be applied by immersion or spraying. The lubricant can be dried in particular hereafter. In other words, the covering means 34 has been screwed in the present case onto the shaft 24 with the lubricant 58 arranged therebetween.

In Figure 1 it is also shown that a paint 60 can be applied on the outer side of the covering means 34 and on the outer side of the flange 18 and also on the upper side of the earth base 14.

The arrangement illustrated in Figure 1 can be produced for example in the following way. In one variant the earth stud 12 can firstly be joined to the earth base 14, for example by stud welding. The covering means 34 can then be screwed onto the earth stud 12. A painting process can then be performed.

Alternatively, it is possible for the covering means 34 to be pre-mounted on the earth stud and for the earth stud with the pre-mounted covering means 34 to be joined to the earth base 14, for example by stud welding, wherein a painting process is then performed.

The painting process generally leads to a heating of the earth stud 12 and the covering means 34. The temperatures occurring here may exceed 200°C. Here, the temperature may also rise in the sealed-off region 52. This could lead to an evaporation of the water constituents of the lubricant 58. On account of the hermetic seal provided by the seal arrangement 46, however, the pressure within the sealed-off region may also rise together with the temperature, such that a boiling point curve of a phase state graph of the water constituent of the lubricant 58 is not exceeded.

Furthermore, there also can be no sudden pressure drop, since the pressure can be maintained by the seal arrangement 46. Consequently, no boiling delay can occur either.

After the painting process, in which the paint 60 is applied, the covering means 34 can consequently be unscrewed from the earth stud 12. Since the lubricant 58 has not become vaporous, it also has not precipitated on the contact surface 28, and therefore this contact surface can still provide a low transition resistance, in particular when, once the covering means 34 has been unscrewed, a contact element such as a cable lug is placed in position, which contacts the contact surface 28 in a planar manner. The covering means 34 can then be screwed on again in order to press the at least one contact element or the at least one cable lug fixedly against the contact surface 28. An electric connection is consequently established between the contact element (not illustrated in Figure 1), via the contact surface directly into the earth stud 12 and from there into the earth base 14.

Figure 2 shows a further embodiment of an earth system 10', which corresponds generally to the earth system 10 of Figure 1 in terms of structure and operating principle. Like elements are therefore characterized by like reference signs.

In the case of the earth system 10', the covering surface 42 and the contact surface 28 are each formed as continuous radial surfaces, wherein a ring seal 50', for example in the form of an O-ring, is placed between these surfaces in order to provide a sealed-off region between the ring seal 50', which forms the seal arrangement 46', and the shaft 12. The ring seal 50' can be removed following a painting process.

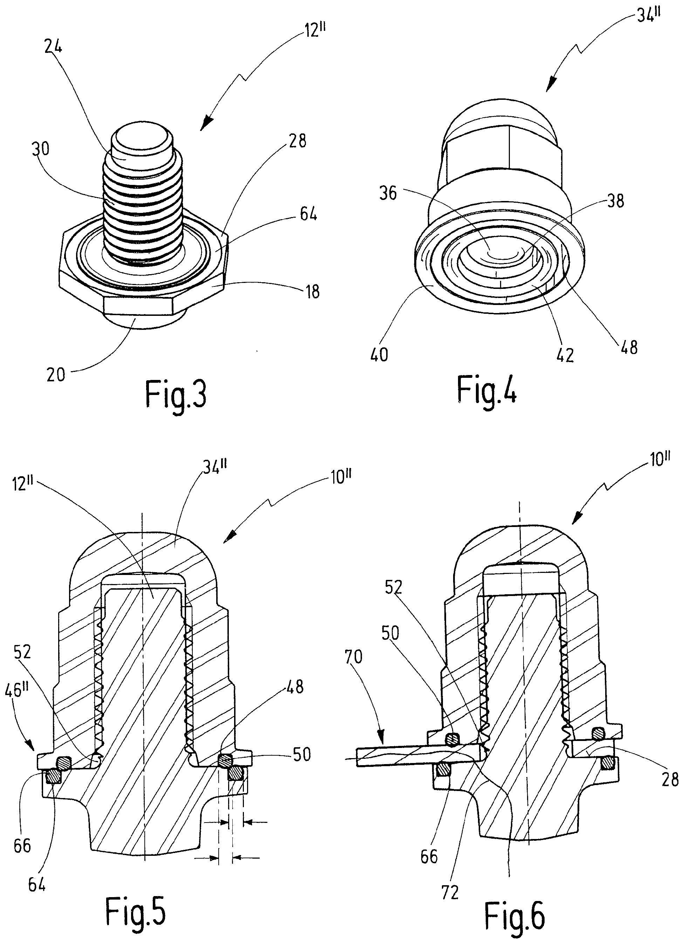

A further embodiment of an earth system 10" comprising an earth stud 12" and a covering means 34" is shown in Figures 3 to 6, wherein the earth system 10" corresponds generally to the earth system 10 of Figure 1 in terms of structure and operating principle. Like elements are therefore characterized by like reference designs. Substantially the differences will be explained hereinafter.

In the case of the earth system 10", a contact surface annular groove 64 is formed in the region of the contact surface 28, into which groove a contact surface ring seal 66 is inserted. As is shown in Figure 5, a seal arrangement 46" is formed as a result, which includes both the covering surface ring seal 50 in the covering surface annular groove 48 and the contact surface ring seal 66 in the contact surface annular groove 64. Alternatively, the contact surface ring seal 66 could also be provided only alternatively to the covering surface ring seal 50.

It can be seen that an increased tightness can be obtained as a result. The ring seals 50, 66 are for this purpose arranged so as to overlap one another in part in the radial direction. The same is true for the corresponding annular grooves 48, 64, as indicated schematically in Figure 5 by arrows.

In Figure 6 it is also shown that a sealed-off region 52 remains sealed off, even following the insertion of a contact element, such as a cable lug 70, since the cover surface ring seal 50 establishes a seal with respect to an upper side of the cable lug 70, wherein the contact surface ring seal 66 establishes a seal against the underside of the cable lug 70. Even after establishment of an electrical earth connection 72, as indicated schematically in Figure 6, more specifically starting from the cable lug 70 via the contact surface 28 into the earth stud 12, the sealed-off region 52 is therefore well protected from the surrounding environment, such that corrosion in the region of the contact surface 28 can be avoided, more specifically for the entire service life of the earth system.

## Claims

1. Electric earth system (10), in particular for a motor vehicle body (15), comprising
- an earth stud (12), which can be connected to an electrically conductive earth base (14) and has a shaft (24) extending along a longitudinal axis (26) and a flange (18), wherein the earth stud (12) defines a contact surface (28) concentric with the shaft (24), and
- a covering means (34), which can be connected to the shaft (24) and has a covering surface (42), which at least partially covers the electric contact surface (28) in the connected state,
**characterized in that**
a seal arrangement (46) is arranged between the contact surface (28) and the covering surface (42), such that a sealed-off region (52) is formed between the seal arrangement (46) and the shaft (12), within which region there is located at least part of the contact surface (42).

2. Earth system according to Claim 1, **characterized in that** a covering surface annular groove (48) is formed in the covering surface (42), into which groove a covering surface ring seal (50) is inserted.

3. Earth system according to Claim 2, **characterized in that** the covering surface (42) has a radial extension with a radially inner region (54) and with a radially outer region (56), wherein the covering surface annular groove (48) is arranged in the radially outer region (56) of the covering surface (42).

4. Earth system according to any one of Claims 1 to 3, **characterized in that** the connection between the shaft (24) and the covering means (34) is a threaded connection (30, 38).

5. Earth system according to any one of Claims 1 to 4, **characterized in that** the covering means (34) is a cap, which is designed to engage over the shaft (24) of the earth stud (12).

6. Earth system according to any one of Claims 1 to 5, **characterized in that** the earth stud (12) is produced from metal and/or the covering means (34) is produced from metal.

7. Earth system according to any one of Claims 1 to 6, **characterized in that** a lubricant (58) is applied to the connection between the shaft (24) and the covering means (34), by means of which lubricant any friction occurring with relative movements between the shaft (24) and the covering means (34) is reduced.

8. Earth system according to any one of Claims 1 to 7, **characterized in that** the earth stud (12) and/or the covering means (34) can be painted externally.

9. Earth system according to any one of Claims 1 to 8, **characterized in that** a contact surface annular groove (64) is formed in the contact surface (28), into which groove a contact surface ring seal (66) is inserted.

10. Earth system according to Claim 9, **characterized in that** the contact surface annular groove (64) is arranged at least partially within the covering surface annular groove (48), as considered radially.

11. Earth system according to Claim 9 or 10, **characterized in that** the contact surface annular groove (64) and the covering surface annular groove (48) overlap one another in part in the radial direction.

12. Method for producing an electric earth connection (72), with use of the earth system (10) according to any one of Claims 1 to 11, said method comprising the following steps:
- providing an electrically conductive earth stud, which has a shaft (24) defining a longitudinal axis (26) and a flange (18);
- joining the earth stud (12) to an electrically conductive earth base (14), in such a way that electrical contact is produced therebetween and an electrical contact surface is defined;
- connecting a covering means, which has a covering surface (42), to the earth stud (12), in such a way that the covering surface (42) at least partially covers the contact surface (28),
**characterized in that**, prior to the connecting step, a seal arrangement (46) is arranged between the contact surface (28) and the covering surface (42), in such a way that in the connected state a sealed-off region (52) is formed between the seal arrangement (46) and the shaft (24), within which region there is located at least part of the contact surface (28).

## Patentansprüche

1. Elektrisches Massesystem (10), insbesondere für eine Kraftfahrzeugkarosserie (15), mit
- einem Massebolzen (12), der mit einer elektrisch leitenden Massebasis (14) verbindbar ist und einen sich entlang einer Längsachse (26) erstreckenden Schaft (24) und einen Flansch (18) aufweist, wobei der Massebolzen (12) eine zu dem Schaft (24) konzentrische Kontaktfläche (28) definiert, und
- einer Abdeckeinrichtung (34), die mit dem Schaft (24) verbindbar ist und eine Abdeckfläche (42) aufweist, die im verbundenen Zustand die elektrische Kontaktfläche (28) zumindest teilweise abdeckt,
**dadurch gekennzeichnet, dass**
eine Dichtungsanordnung (46) zwischen der Kontaktfläche (28) und der Abdeckfläche (42) so angeordnet ist, dass zwischen der Dichtungsanordnung (46) und dem Schaft (12) ein abgedichteter Bereich (52) ausgebildet ist, innerhalb dessen zumindest ein Teil der Kontaktfläche (42) liegt.

2. Massesystem nach Anspruch 1, **dadurch gekennzeichnet, dass** in der Abdeckfläche (42) eine Abdeckflächen-Ringnut (48) ausgebildet ist, in die ein Abdeckflächen-Dichtungsring (50) eingesetzt ist.

3. Massesystem nach Anspruch 2, **dadurch gekennzeichnet, dass** die Abdeckfläche (42) eine radiale Erstreckung mit einem radial inneren Bereich (54) und mit einem radial äußeren Bereich (56) hat, wobei die Abdeckflächen-Ringnut (48) in dem radial äußeren Bereich (56) der Abdeckfläche (42) angeordnet ist.

4. Massesystem nach einem der Ansprüche 1-3, **dadurch gekennzeichnet, dass** die Verbindung zwischen dem Schaft (24) und der Ansprüche (34) eine Gewindeverbindung (30, 38) ist.

5. Massesystem nach einem der Ansprüche 1-4, **dadurch gekennzeichnet, dass** die Abdeckeinrichtung (34) eine Kappe ist, die dazu ausgebildet ist, den Schaft (24) des Massebolzens (12) zu übergreifen.

6. Massesystem nach einem der Ansprüche 1-5, **dadurch gekennzeichnet, dass** der Massebolzen (12) aus Metall hergestellt ist und/oder die Abdeckeinrichtung (34) aus Metall hergestellt ist.

7. Massesystem nach einem der Ansprüche 1-6, **dadurch gekennzeichnet, dass** auf die Verbindung zwischen dem Schaft (24) und der Abdeckeinrichtung (34) ein Gleitmittel (58) aufgebracht ist, mittels dessen eine Reibung bei Relativbewegungen zwischen dem Schaft (24) und der Abdeckeinrichtung (34) verringert wird.

8. Massesystem nach einem der Ansprüche 1-7, **dadurch gekennzeichnet, dass** der Massebolzen (12) und/oder die Abdeckeinrichtung (34) außenseitig lackierbar ist.

9. Massesystem nach einem der Ansprüche 1-8, **dadurch gekennzeichnet, dass** in der Kontaktfläche (28) eine Kontaktflächen-Ringnut (64) ausgebildet ist, in die ein Kontaktflächen-Dichtungsring (66) eingesetzt ist.

10. Massesystem nach Anspruch 9, **dadurch gekennzeichnet, dass** die Kontaktflächen-Ringnut (64) radial gesehen zumindest teilweise innerhalb der Abdeckflächen-Ringnut (48) angeordnet ist.

11. Massesystem nach Anspruch 9 oder 10, **dadurch gekennzeichnet, dass** sich die Kontaktflächen-Ringnut (64) und die Abdeckflächen-Ringnut (48) in radialer Richtung teilweise überschneiden.

12. Verfahren zum Herstellen einer elektrischen Masseverbindung (72), unter Verwendung des Massesystems (10) nach einem der Ansprüche 1-11, mit den Schritten:
- Bereitstellen eines elektrisch leitenden Massebolzens, der einen eine Längsachse (26) definierenden Schaft (24) und einen Flansch (18) aufweist;
- Fügen des Massebolzens (12) auf eine elektrisch leitende Massebasis (14), derart, dass ein elektrischer Kontakt dazwischen hergestellt und eine elektrische Kontaktfläche definiert wird;
- Verbinden einer Abdeckeinrichtung, die eine Abdeckfläche (42) aufweist, mit dem Massebolzen (12), derart, dass die Abdeckfläche (42) die Kontaktfläche (28) zumindest teilweise abdeckt,
wobei vor dem Verbindungsschritt eine Dichtungsanordnung (46) zwischen der Kontaktfläche (28) und der Abdeckfläche (42) angeordnet wird, derart, dass im verbundenen Zustand zwischen der Dichtungsanordnung (46) und dem Schaft (24) ein abgedichteter Bereich (52) ausgebildet ist, innerhalb dessen zumindest ein Teil der Kontaktfläche (28) liegt.

## Revendications

1. Système de mise à la terre électrique (10), en particulier pour une carrosserie de véhicule à moteur (15), comprenant
- un plot de mise à la terre (12), qui peut être connecté à une base de terre électriquement conductrice (14) et qui a un axe (24) s'étendant le long d'un axe longitudinal (26) et une bride (18), dans lequel le plot de mise à la terre (12) définit une surface de contact (28) concentrique avec l'axe (24), et
- un moyen de couverture (34), qui peut être connecté à l'axe (24) et a une surface de couverture (42), qui couvre au moins partiellement la surface de contact électrique (28) dans l'état connecté,
**caractérisé en ce que**
un agencement de joint (46) est agencé entre la surface de contact (28) et la surface de couverture (42), de sorte qu'une région non scellée (52) est formée entre l'agencement de joint (46) et l'axe (12), région à l'intérieur de laquelle est située au moins une partie de la surface de contact (42).

2. Système de mise à la terre selon la revendication 1, **caractérisé en ce qu'**une rainure annulaire de surface de couverture (48) est formée dans la surface de couverture (42), rainure dans laquelle un joint torique de surface de couverture (50) est inséré.

3. Système de mise à la terre selon la revendication 2, **caractérisé en ce que** la surface de couverture (42) a une extension radiale avec une région intérieure de façon radiale (54) et avec une région extérieure de façon radiale (56), dans lequel la rainure annulaire de surface de couverture (48) est agencée dans la région extérieure de façon radiale (56) de la surface de couverture (42).

4. Système de mise à la terre selon l'une quelconque des revendications 1 à 3, **caractérisé en ce que** la connexion entre l'axe (24) et le moyen de couverture (34) est une connexion filetée (30, 38).

5. Système de mise à la terre selon l'une quelconque des revendications 1 à 4, **caractérisé en ce que** le moyen de couverture (34) est un capuchon, qui est conçu pour se mettre en prise sur l'axe (24) du plot de terre (12).

6. Système de mise à la terre selon l'une quelconque des revendications 1 à 5, **caractérisé en ce que** le plot de terre (12) est produit à partir de métal et/ou le moyen de couverture (34) est produit à partir de métal.

7. Système de mise à la terre selon l'une quelconque des revendications précédentes 1 à 6, **caractérisé en ce qu'**un lubrifiant (58) est appliqué à la connexion entre l'axe (24) et le moyen de couverture (34), lubrifiant au moyen duquel n'importe quelle friction se produisant avec des mouvements relatifs entre l'axe (24) et le moyen de couverture (34) est réduite.

8. Système de mise à la terre selon l'une quelconque des revendications 1 à 7, **caractérisé en ce que** le plot de mise à la terre (12) et/ou le moyen de couverture (34) peuvent être peints extérieurement.

9. Système de mise à la terre selon l'une quelconque des revendications 1 à 8, **caractérisé en ce qu'**une rainure annulaire de surface de contact (64) est formée dans la surface de contact (28), rainure dans laquelle un joint torique de surface de contact (66) est inséré.

10. Système de mise à la terre selon la revendication 9, **caractérisé en ce que** la rainure annulaire de surface de contact (64) est agencée au moins partiellement à l'intérieur de la rainure annulaire de surface de couverture (48), comme considéré de façon radiale.

11. Système de mise à la terre selon la revendication 9 ou 10, **caractérisé en ce que** la rainure annulaire de surface de contact (64) et la rainure annulaire de surface de couverture (48) se chevauchent en partie dans la direction radiale.

12. Procédé pour produire une connexion électrique de mise à la terre (72), avec l'utilisation du système de mise à la terre (10) selon l'une quelconque des revendications 1 à 11, ledit procédé comprenant les étapes suivantes :
- fourniture d'un plot de mise à la terre électriquement conducteur, qui a un axe (24) définissant un axe longitudinal (26) et une bride (18) ;
- jonction du plot de terre (12) à une base de terre électriquement conductrice (14), d'une telle façon qu'un contact électrique est produit entre ces derniers et qu'une surface de contact électrique est définie ;
- connexion d'un moyen de couverture, qui a une surface de couverture (42), au plot de terre (12), d'une telle façon que la surface de couverture (42) couvre au moins partiellement la surface de contact (28),
**caractérisé en ce que**,
avant l'étape de connexion, un agencement de joint (46) est agencé entre la surface de contact (28) et la surface de couverture (42), d'une telle façon que dans l'état connecté une région non scellée (52) est formée entre l'agencement de joint (46) et l'axe (24), région à l'intérieur de laquelle est située au moins une partie de la surface de contact (28).
